# EUROPÄISCHE PATENTSCHRIFT

(11) **EP 3 488 841 B1**
(45) Veröffentlichungstag und Bekanntmachung des Hinweises auf die Patenterteilung: **18.03.2020**
(21) Anmeldenummer: 17203515.6
(22) Anmeldetag: 24.11.2017
(51) Int. Cl.: A61J 3/07

(54) **KAPSELWIEGEEINRICHTUNG UND KAPSELFÜLLEINRICHTUNG MIT EINER SOLCHEN KAPSELWIEGEEINRICHTUNG**
CAPSULE WEIGHING DEVICE AND CAPSULE FILLING DEVICE WITH SUCH A CAPSULE WEIGHING DEVICE
DISPOSITIF DE PESAGE DE GÉLULES ET DISPOSITIF DE REMPLISSAGE POURVU D'UN TEL DISPOSITIF DE PESAGE DE GÉLULES

(43) Veröffentlichungstag der Anmeldung: 29.05.2019
(73) Patentinhaber: Harro Höfliger Verpackungsmaschinen GmbH, 71573 Allmersbach im Tal (DE)
(72) Erfinder: Wurst, Reiner, 71573 Allmersbach im Tal (DE); Wildenhain, Michael, 71573 Allmersbach im Tal (DE); Puppich, Thomas, 71573 Allmersbach im Tal (DE); Handel, Bernhard, 71573 Allmersbach im Tal (DE)
(74) Vertreter: Zurhorst, Stefan

(56) Entgegenhaltungen:
- WO-A1-96/20390
- DE-A1-102014 110 906

## Beschreibung

Die Erfindung betrifft eine Kapselwiegeeinrichtung zum Wiegen von Kapseln mit den Merkmalen nach dem Oberbegriff des Anspruchs 1 sowie eine Kapselfülleinrichtung mit mindestens einer solchen Kapselwiegeeinrichtung.

Vorrangig im pharmazeutischen Bereich, aber auch im Bereich der Nahrungsergänzungsmittel werden Kapseln zur Verabreichung dosierter Mengen eines pulvrigen, granulatartigen oder flüssigen Präparates eingesetzt. Die Kapseln bestehen aus Hartgelatine oder dergleichen und lösen sich nach dem Verschlucken auf, in dessen Folge ihr Inhalt freigesetzt wird.

Bei sogenannten Steckkapseln erfolgt auf getakteten Kapselfüllmaschinen zunächst eine Zufuhr von Leerkapseln, welche aufrecht stehend in Kapselhaltern positioniert und dann geöffnet werden. In einer oder mehreren Dosierstationen werden die nach oben offenen Kapselunterteile mit dem vorgesehenen Präparat in dosierter Menge befüllt. Die zuvor abgezogenen Kapseloberteile werden in einer Schließstation auf die gefüllten Kapselunterteile aufgesteckt. Die auf diese Weise entstandenen fertig befüllten Kapseln werden schließlich in einer Ausstoßstation aus ihren Kapselhaltern herausgenommen und dann der Weiterverarbeitung, insbesondere der Verpackung zugeführt.

Bestimmte Qualitätsanforderungen können es erforderlich machen, zumindest stichprobenartig oder auch im Rahmen einer hundertprozentigen In-Prozess-Kontrolle sämtliche Kapseln zu wiegen, um eine ordnungsgemäße Befüllung zu prüfen und sicherzustellen.

Im Stand der Technik werden hierzu Kapselwiegeeinrichtungen eingesetzt, bei denen die zu wiegenden Kapseln auf einer oberen Kapselaufnahme in Gewichtskraftrichtung aufgelegt und dann gewogen werden. Hierzu ist ein komplexer Bewegungsablauf der Kapsel erforderlich. Sie wird aus ihrer stehenden Normalposition in eine liegende Position verbracht, seitlich herangeführt und in einer Vertikalbewegung auf der Kapselaufnahme abgelegt. Nachdem die Einheit aus Kapselaufnahme und aufliegender Kapsel zur Ruhe gekommen ist, wird die Wiegung durchgeführt. Anschließend erfolgt ein Weitertransport der Kapsel in kombinierter Vertikal- und Horizontalbewegung, wobei das Anheben eine Richtungsumkehr gegenüber dem zuvor erfolgten Ablegen bedeutet. Schließlich kann dann erneut eine Drehung der Kapsel von ihrer liegenden Wiegeposition in eine aufrecht stehende Position erforderlich werden.

Der komplexe, mit Richtungsumkehr verbundene Bewegungsablauf ist nicht nur mechanisch aufwändig, sondern erfordert auch entsprechende Zeit. Der Zeitaufwand stellt einen begrenzenden Faktor für die Taktzeit der Kapselfüllmaschine insbesondere dann dar, wenn eine hundertprozentige Kontrolle aller verarbeiteten Kapseln erfolgen soll.

Im Stand der Technik sind auch sogenannte Tara-Brutto-Verwiegungen von Kapseln bekannt, um besonders präzise Messungen insbesondere bei anteilig kleinen Füllgewichten durchführen zu können. Hierbei werden zunächst die Leerkapseln gewogen und daraus für jede Kapsel das Tara-Gewicht bestimmt. Später erfolgt dann eine Wiegung der befüllten Kapseln zur Bestimmung des Brutto-Gewichtes. Aus der Differenz beider Werte folgt das Netto-Gewicht der tatsächlich vorhandenen Kapselfüllung. Auf diese Weise können insbesondere Schwankungen der Leerkapselmassen eliminiert werden. Die weiter oben beschriebenen Schwierigkeiten hinsichtlich Vorrichtungs- und Zeitaufwand treten hierbei allerdings besonders deutlich hervor. Eine weitere Kapselwiegeeinrichtung ist bekannt aus WO96/20390.

Der Erfindung liegt die Aufgabe zugrunde, eine gattungsgemäße Kapselwiegeeinrichtung derart weiterzubilden, dass eine schnellere und dennoch präzise Wiegung der Kapsel vorgenommen werden kann.

Diese Aufgabe wird durch eine Kapselwiegeeinrichtung mit den Merkmalen des Anspruchs 1 gelöst.

Der Erfindung liegt des Weiteren die Aufgabe zu Grunde, eine Kapselfülleinrichtung mit verbesserten Prüfmöglichkeiten für die darin gehandhabten Kapseln bereitzustellen. Diese Aufgabe wird durch eine Kapselfülleinrichtung mit den Merkmalen des Anspruchs 7 gelöst.

Nach der Erfindung ist eine Kapselwiegeeinrichtung und Kapselfülleinrichtung mit einer solchen Kapselwiegeeinrichtung vorgesehen, wobei die Kapselmessaufnahme bezogen auf die Gewichtskraftrichtung seitlich der Messeinheit positioniert ist und einen in der Gewichtskraftrichtung durchgehenden Kapselmesskanal mit einem lösbaren Sperrmechanismus für die Kapsel aufweist. Diese körperliche Ausgestaltung erlaubt es, in einem zugehörigen erfindungsgemäßen Verfahren einzelne Kapseln von oben in den Kapselmesskanal der Kapselmessaufnahme einzuführen und nach unten wieder abzuführen. Der lösbare Sperrmechanismus hält die Kapsel für die Dauer der Wiegung fest und gibt sie anschließend nach unten frei. Durch die Anordnung der Kapselmessaufnahme seitlich der Messeinheit ist die Messeinheit bei einer vertikalen Durchführung der Kapsel nicht im Weg. Da der Kapselmesskanal in der Gewichtskraftrichtung durchgehend ist, reicht die wirkende Gewichtskraft für den Transport der Kapsel aus, ohne dass dafür eine eigene Antriebsmechanik erforderlich wäre. Im Bereich der Kapselwiegeeinrichtung kann es ausreichen, dass sich die einzelnen Kapseln ausschließlich abwärts bewegen. Zumindest bezogen auf die vertikale Richtung findet hierbei keine Richtungsumkehr statt. Im Rahmen der Erfindung kann es aber auch in Betracht kommen, die soeben gewogene Kapsel zurück nach oben aus der Kapselmessaufnahme herauszubewegen. In bevorzugter Weiterbildung ist der Kapselmesskanal für die Aufnahme einer aufrecht stehenden Kapsel ausgelegt. Insbesondere dann, wenn die Kapselfülleinrichtung ohnehin einen Kapselführungskanal umfasst, und wenn der Kapselmesskanal einen Teilabschnitt dieses ohnehin vorhandenen Kapselführungskanals bildet, ist auch keine Drehung der Kapsel von einer aufrecht stehenden Position in eine liegende Position und/oder umgekehrt erforderlich. In der Folge können hochpräzise Gewichtsmessungen an den Kapseln mit minimalem Vorrichtungsaufwand bei erheblich verkürzter Taktzeit vorgenommen werden.

Zur Bildung des Kapselmesskanals können Führungsschienen, Führungsdrähte oder dergleichen herangezogen werden. Bevorzugt ist der Kapselmesskanal als in Umfangsrichtung geschlossene Röhre ausgebildet. Hierdurch ist die Kapsel beim Wiegen gegen äußere mechanische Einflüsse geschützt. In zweckmäßiger Weiterbildung weist die Kapselwiegeeinrichtung mindestens einen Windschutz zum bedarfsabhängigen Verschließen und Öffnen der Eingangsseite und/oder der Ausgangsseite des Kapselmesskanals auf. Insbesondere in Verbindung mit der geschlossenen Röhrenform kann eine Verfälschung der Messergebnisse durch Luftzug ausgeschlossen oder zumindest reduziert werden. In zweckmäßiger Weiterbildung ist der Kapselmesskanal elektrisch geschirmt. Hierfür kommt der Einsatz elektrisch leitender Materialien in Betracht. Insbesondere kann es hierzu zweckmäßig sein, den Kapselmesskanal aus einem metallischen Werkstoff beispielsweise in Form eines Netzes, eines Gitters, einer geschlossenen Röhre oder dergleichen herzustellen. Jedenfalls entsteht ein Faraday'scher Käfig. Potentielle Messwertverfälschungen durch elektrostatische Kräfte werden weitgehend eliminiert.

Bevorzugt umfasst der Sperrmechanismus einen am Kapselmesskanal gelagerten Riegel und einen von der Kapselmessaufnahme getrennten Antrieb des Riegels. In einem solchen Fall kann der Antrieb berührungslos, beispielsweise über ein Magnetfeld oder dergleichen, auf den Riegel zu dessen Betätigung einwirken, tritt jedoch bei der eigentlichen Wiegung nicht in Erscheinung. Der Antrieb und dessen Steuer- und Energieversorgungsleitungen können das Messergebnis nicht verfälschen. Der Riegel selbst kann klein und einfach gehalten sein, so dass die Masse der Kapselmessaufnahme auf ein Minimum reduziert ist. Dies trägt zur Verkürzung der Taktzeiten beim Wiegen und auch zur Messpräzision bei.

Es kann ausreichen, eine erfindungsgemäße Kapselwiegeeinrichtung nur auf der Ausgangsseite der Kapselfülleinrichtung zu positionieren, um damit eine schnell getaktete Wiegung der befüllten Kapseln vorzunehmen. Bevorzugt umfasst die Kapselfülleinrichtung eine Aufnahmestation für leere Kapseln und eine Ausstoßstation für befüllte Kapseln, wobei eine erste Kapselwiegeeinrichtung eingangsseitig der Aufnahmestation für eine Tara-Wiegung angeordnet ist, und wobei eine zweite Kapselwiegeeinrichtung ausgangsseitig der Ausstoßstation für eine Brutto-Wiegung angeordnet ist. Hierdurch kann selbst bei sehr kurzen Taktzeiten eine Tara-Brutto-Verwiegung mit präziser Bestimmung des Netto-Inhaltes einzelner oder aller Kapseln vorgenommen werden, was die gewichtsabhängige Sortierung von für gut oder schlecht befundenen Kapseln im Rahmen einer hundertprozentigen In-Prozess-Kontrolle erlaubt.

Ein Ausführungsbeispiel der Erfindung ist nachfolgend anhand der Zeichnung näher erläutert. Es zeigen:
- Fig. 1: in einer schematischen Schnittdarstellung eine erfindungsgemäß ausgestaltete Kapselwiegeeinrichtung mit vertikal orientierter Kapselaufnahme und mit einem zughörigen Sperrmechanismus, und
- Fig. 2: in schematischer Draufsicht eine erfindungsgemäße Kapselfülleinrichtung mit insgesamt zwei Kapselwiegeeinrichtungen nach Fig. 1 für eine Tara-Brutto-Verwiegung.

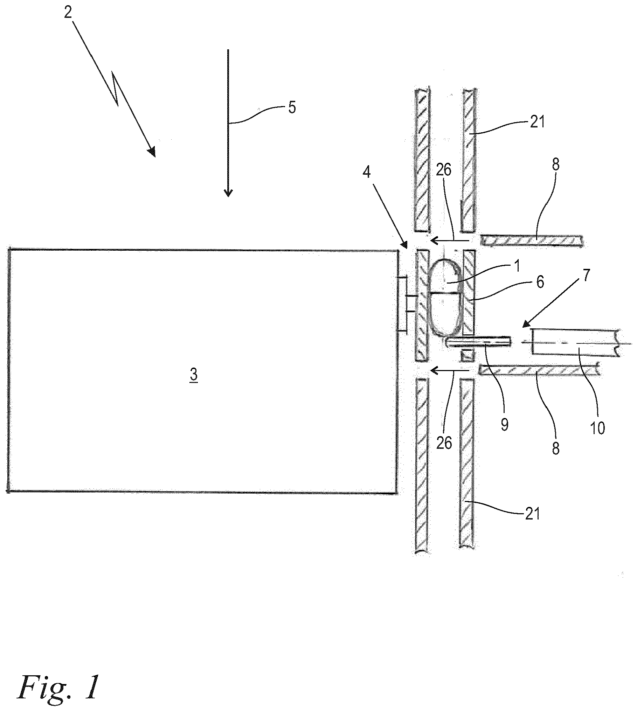

Fig. 1 zeigt in einer schematischen Schnittdarstellung eine erfindungsgemäß ausgestaltete Kapselwiegeeinrichtung 2 für das Wiegen einzelner Kapseln 1. Die Kapselwiegeeinrichtung 2 umfasst eine nur schematisch angedeutete Messeinheit 3 mit einem integrierten Messaufnehmer und mit einer Kapselmessaufnahme 4, in welcher die jeweilige Kapsel 1 während der Wiegung gehalten ist. Die Kapselwiegeeinrichtung 2 ist in ihrer gewöhnlichen Betriebsposition relativ zu der nach unten wirkenden und durch einen Pfeil angegebenen Gewichtskraftrichtung 5 gezeigt, demnach sich die Kapselmessaufnahme 4 hierauf bezogen seitlich neben der Messeinheit 3 befindet.

In der Kapselmessaufnahme 4 ist ein Kapselmesskanal 6 ausgeformt, welcher in der Gewichtskraftrichtung 5 von oben nach unten durchgehend verläuft und eine Kapsel 1 aufnimmt bzw. hindurchleitet. Im gezeigten Ausführungsbeispiel verläuft der Kapselmesskanal 6 parallel zur Gewichtskraftrichtung 5, also vertikal. Er kann aber auch mit einer seitlichen Richtungskomponente schräg zur Gewichtskraftrichtung 5 geneigt sein. Es sollte bevorzugt nur insoweit ein Verlauf in der Gewichtskraftrichtung 5 gegeben sein, dass die jeweilige Kapsel 1 infolge der auf sie einwirkenden Gewichtskraft selbsttätig von oben nach unten hindurchtreten kann. Gegebenenfalls kann aber auch eine Unterstützung des Kapseldurchtritts beispielsweise mit Pressluft vorteilhaft sein, um eine Verklemmung oder dergleichen zu überwinden. Alternativ oder zusätzlich können aber auch andere Mechanismen für eine Bewegung der Kapseln 1 in Betracht kommen, wobei auch Bewegungsrichtungen entgegen der Gewichtskraftrichtung 5 im Rahmen der Erfindung möglich sind.

Außerdem ist noch erkennbar, dass der Kapselmesskanal 6 für die Aufnahme einer aufrecht stehenden Kapsel 1 ausgelegt ist. Hierzu weist er einen auf den Durchmesser der Kapsel 1 abgestimmten, insbesondere kreisrunden Querschnitt auf. Es können aber auch andere Querschnittsformen zweckmäßig sein. Jedenfalls ist der Querschnitt des Kapselmesskanals 6 derart bemessen, dass die darin befindliche Kapsel 1 in ihrer gezeigten aufrechten Position gehalten wird.

Die Kapselmessaufnahme 4 umfasst des Weiteren einen Sperrmechanismus 7, der sich aus einem am Kapselmesskanal 6 gelagerten Riegel 9 und einem von der Kapselmessaufnahme 4 getrennten Antrieb 10 des Riegels 9 zusammensetzt. Der Riegel 9 kann mittels des Antriebs 10 insbesondere berührungslos und beispielsweise durch magnetische Einwirkung zwischen einer den Durchtritt des Kapselmesskanals 6 versperrenden Verriegelungsposition und einer den Durchtritt des Kapselmesskanals 6 freigebenden Entriegelungsposition hin und her geschaltet werden. Zeitlich außerhalb dieser Schaltvorgänge besteht keine mechanische Wechselwirkung zwischen dem Riegel 9 und seinem Antrieb 10, so dass der Antrieb 10 dann keine Auswirkung auf den Wiegevorgang der Kapselmessaufnahme 4 mit der Kapsel 1 hat.

Der Kapselmesskanal 6 ist bevorzugt als in Umfangsrichtung zumindest weitgehend geschlossene Röhre ausgebildet. Dies beinhaltet die Möglichkeit des Vorhandenseins eines Längsschlitzes, durch den die Kapsel 1 mittels eines nicht gezeigten Mitnehmers aufwärts oder abwärts bewegt werden könnte. Im gezeigten bevorzugten Ausführungsbeispiel handelt es jedoch um eine in Umfangsrichtung vollständig geschlossene Röhre. Darüber hinaus verfügt die Kapselwiegeeinrichtung 2 noch über mindestens einen Windschutz 8 zum bedarfsabhängigen Verschließen und Öffnen der Eingangsseite und/oder der Ausgangsseite des Kapselmesskanals 6. Im gezeigten Ausführungsbeispiel ist je ein Windschutz 8 an der oberen Eingangsseite und an der unteren Ausgangsseite des Kapselmesskanals 6 angeordnet. Jeder Windschutz 8 ist in der geöffneten Position gezeigt, kann aber bei Bedarf entsprechend einem Pfeil 26 in eine geschlossene Position verfahren und daraus auch wieder zurückgefahren werden. Sobald die Kapsel 1 entsprechend der Darstellung nach Fig. 1 ihre Wiegeposition erreicht hat, kann damit ein nahezu hermetisch abgeschlossener Raum ohne verfälschende Wirkung von Luftzug oder dergleichen erzeugt werden, in dem die Kapsel in Ruhe gelagert ist und gewogen wird.

In einem zugehörigen Verfahren ist der obere Windschutz 8 gemäß Fig. 1 zunächst offen, während sich der Riegel 9 zunächst in der gezeigten geschlossenen Verriegelungsposition befindet. Nun wird die zu verwiegende Kapsel in aufrechter Position von oben in den Kapselmesskanal 6 der Kapselmessaufnahme 4 eingeführt, wo sie in Folge ihrer Gewichtskraft auf den geschlossenen Riegel 9 fällt und dort liegen bleibt. Der obere und auch der untere Windschutz 8 kann nun in Richtung der Pfeile 26 geschlossen werden, ohne allerdings in unmittelbaren Kontakt mit der Kapselmessaufnahme 4 zu treten. Alternativ kann es aber auch zweckmäßig sein, den jeweiligen Windschutz 8 an der Kapselmessaufnahme 4 zu lagern und analog zum Riegel 9 mit einem externen Antrieb zu betätigen. Jedenfalls wird nun die Wiegung vorgenommen, bei der in der Messeinheit 3 das Gewicht der eingeführten Kapsel 1 bestimmt und für eine spätere Auswertung bereitgehalten wird. Nach erfolgter Wiegung wird zumindest der untere Windschutz 8 geöffnet, und es erfolgt eine Entriegelung des Riegels 9 mittels seines Antriebes 10. Die gewogene Kapsel 1 fällt nach unten aus der Kapselmessaufnahme 4 heraus und kann der Weiterbehandlung zugeführt werden. Insgesamt durchläuft dabei die Kapsel 1 die Kapselmessaufnahme 4 von oben nach unten, ohne dabei eine Richtungsumkehr zu erfahren, und ohne dabei ihre aufrechte Lage zu verändern. Bei entsprechender Querschnittsanpassung des Kapselmesskanals kann das beschriebene Verfahren aber auch durchgängig für liegende Kapseln durchgeführt werden, ohne dass eine zeitraubende Drehung erforderlich wird.

Darüber hinaus ist der Kapselmesskanal 6 elektrisch geschirmt, wozu er im gezeigten Ausführungsbeispiel elektrisch leitend als Röhre aus einem metallischen Werkstoff ausgebildet ist. Es kann auch ein elektrisch leitfähiger Kunststoff, ein eingebettetes Drahtgitter oder dergleichen zum Einsatz kommen. Sinngemäß das Gleiche kann auch für den oberen und/oder auch den unteren Windschutz 8 gelten. Jedenfalls wirkt hierdurch der Kapselmesskanal 6 als Faraday'scher Käfig zur Abschirmung gegen äußere elektromechanische bzw. elektrostatische Einflüsse.

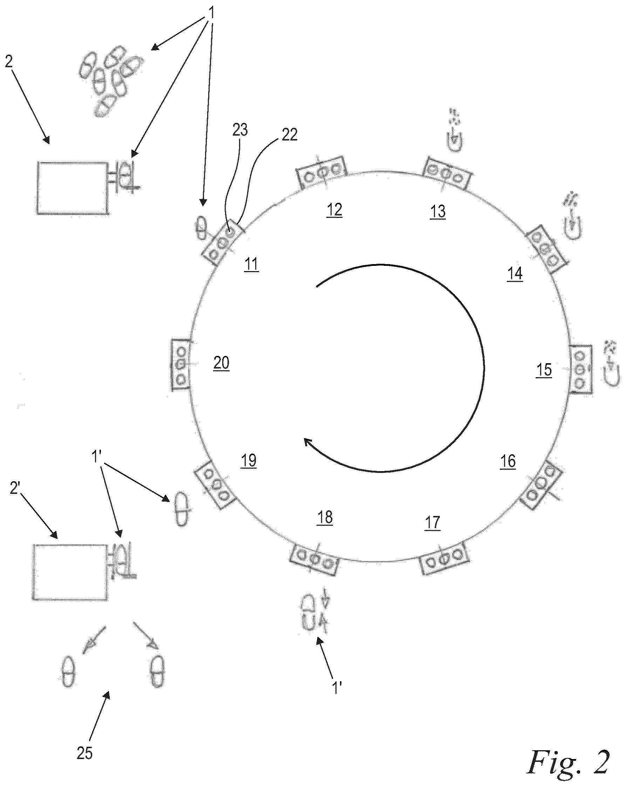

Fig. 2 zeigt in einer schematischen Draufsicht eine erfindungsgemäße Kapselfülleinrichtung mit mehreren, hier beispielhaft zehn getaktet zum Einsatz kommenden Bearbeitungsstationen 11 bis 20. Zu benennen sind hier eine Aufnahmestation 11, eine Öffnungsstation 12, mehrere Dosierstationen 13, 14, 15, eine Schließstation 18 und eine Ausstoßstation 19. Zum Durchfahren der verschiedenen Bearbeitungsstationen 11 bis 20 weist die Kapselfülleinrichtung einen Drehtisch mit schematisch angedeuteten Kapselhaltern 22 auf, wobei in jedem Kapselhalter 22 mindestens eine, hier mehrere Kapselaufnahmen 23 für je eine Kapsel 1 eingebracht ist. Mittels des Drehtisches und der daran angebrachten Kapselhalter 22 durchlaufen die Kapseln 1 die verschiedenen Bearbeitungsstationen 11 bis 20 sequenziell und getaktet in einer Durchlaufrichtung 24.

Die Kapselfülleinrichtung umfasst zusätzlich eine erste Kapselwiegeeinrichtung 2 und eine zweite Kapselwiegeeinrichtung 2', wobei beide Kapselwiegeeinrichtungen 2, 2' identisch der Ausgestaltung nach Fig. 1 entsprechen. Teil der Kapselfülleinrichtung ist außerdem für jede Kapselwiegeeinrichtung 2, 2' je ein Kapselführungskanal 21, wie er zur besseren Übersicht nur in Fig. 1 dargestellt ist. Die Kapselmessaufnahme 4 ist dabei derart ausgestaltet, dass ihr integrierter Kapselmesskanal 6 jeweils einen Teilabschnitt des Kapselführungskanals 21 bildet. Die erste Kapselwiegeeinrichtung 2 befindet sich eingangsseitig der Aufnahmestation 11 zur Wiegung von zugeführten leeren Kapseln 1, während die zweite Kapselwiegeeinrichtung 2' ausgangsseitig der Ausstoßstation 19 zur Wiegung voller Kapseln 1' positioniert ist. Bei den Kapseln 1, 1' handelt es sich vorliegend um Steckkapseln mit einem Kapselunterteil und einem aufgesteckten Kapseloberteil. Es können aber auch andere Sorten von Kapseln 1, 1' gemäß der Erfindung gewogen werden.

Im erfindungsgemäßen Verfahrensablauf werden leere Kapseln 1 der ersten Kapselwiegeeinrichtung 2 zugeführt und dort in vorstehend beschriebener Weise gewogen. Da hier leere Kapseln 1 gewogen werden, handelt es sich um eine sogenannte Tara-Wiegung. Die gewogenen leeren Kapseln 1 werden nach unten durch den Kapselführungskanal 21 (Fig. 1) hindurch zur Aufnahmestation 11 geleitet. Dort werden sich in aufrechter Position in die Kapselaufnahmen 23 der Kapselhalter 22 eingesteckt. Ein derart mit leeren Kapseln 1 bestückter Kapselhalter 22 wird nun zur nächsten Station, nämlich zur Öffnungsstation 12 verfahren, wo die leeren Kapseln 1 geöffnet werden. Mit anderen Worten werden dort die Kapseloberteile von den Kapselunterteilen abgezogen. In den nachfolgenden Dosierstationen 13, 14, 15 werden dosierte Mengen eines Füllgutes in die nach oben offenen Kapselunterteile eingefüllt. Die zuvor abgezogenen Kapseloberteile werden an der Schließstation 18 wieder auf ihre zugehörigen, nunmehr befüllten Kapselunterteile aufgesteckt, so dass befüllte Kapseln 1' entstehen.

Die befüllten Kapseln 1' werden an der nachfolgenden Ausstoßstation 19 aus den Kapselaufnahmen 23 ihrer Kapselhalter 22 ausgestoßen und dann über den zugehörigen Kapselführungskanal 21 analog zur Darstellung nach Fig. 1 von oben in die zweite Kapselwiegeeinrichtung 2' eingeführt und dort gewogen. Da hier befüllte Kapseln 1' gewogen werden, handelt es sich um eine sogenannte Brutto-Wiegung. Durch Differenzbildung der Ergebnisse aus der Brutto-Wiegung und der Tara-Wiegung erfolgt eine Gewichtsbestimmung des tatsächlich in der befüllten Kapsel 1' befindlichen Inhalts als Istwert. Über einen Vergleich mit einem Sollwert bzw. mit einer zulässigen Sollwertspanne wird nun automatisiert die Entscheidung getroffen, ob es sich um eine gute oder eine schlechte Kapsel 1' handelt. In einer nachgeschalteten, ebenfalls zur erfindungsgemäßen Kapselfülleinrichtung gehörenden Kapselsortierung 25 erfolgt schließlich eine Trennung der als gut erkannten befüllten Kapseln 1' von den schlechten, nicht spezifikationsgemäßen Kapseln.

## Patentansprüche

1. Kapselwiegeeinrichtung (2, 2') zum Wiegen von Kapseln (1, 1'), umfassend eine Messeinheit (3) und eine Kapselmessaufnahme (4) zum Halten einer Kapsel (1, 1') beim Wiegen in einer Gewichtskraftrichtung (5),
**dadurch gekennzeichnet, dass** die Kapselmessaufnahme (4) bezogen auf die Gewichtskraftrichtung (5) seitlich der Messeinheit (3) positioniert ist und einen in der Gewichtskraftrichtung (5) durchgehenden Kapselmesskanal (6) mit einem lösbaren Sperrmechanismus (7) für die Kapsel (1, 1') aufweist.

2. Kapselwiegeeinrichtung nach Anspruch 1,
**dadurch gekennzeichnet, dass** der Kapselmesskanal (6) als in Umfangsrichtung geschlossene Röhre ausgebildet ist.

3. Kapselwiegeeinrichtung nach Anspruch 1 oder 2,
**dadurch gekennzeichnet, dass** die Kapselwiegeeinrichtung (2, 2') mindestens einen Windschutz (8) zum bedarfsabhängigen Verschließen und Öffnen der Eingangsseite und/oder der Ausgangsseite des Kapselmesskanals (6) aufweist.

4. Kapselwiegeeinrichtung nach einem der Ansprüche 1 bis 3,
**dadurch gekennzeichnet, dass** der Kapselmesskanal (6) elektrisch geschirmt ist.

5. Kapselwiegeeinrichtung nach einem der Ansprüche 1 bis 4,
**dadurch gekennzeichnet, dass** der Sperrmechanismus (7) einen am Kapselmesskanal (6) gelagerten Riegel (9) und einen von der Kapselmessaufnahme (4) getrennten Antrieb (10) des Riegels (9) umfasst.

6. Kapselwiegeeinrichtung nach einem der Ansprüche 1 bis 5,
**dadurch gekennzeichnet, dass** der Kapselmesskanal (6) für die Aufnahme einer aufrecht stehenden Kapsel (1, 1') ausgelegt ist.

7. Kapselfülleinrichtung umfassend mindestens eine Kapselwiegeeinrichtung (2, 2') nach einem der Ansprüche 1 bis 6.

8. Kapselfülleinrichtung nach Anspruch 7,
**dadurch gekennzeichnet, dass** die Kapselfülleinrichtung einen Kapselführungskanal (21) umfasst, und dass der Kapselmesskanal (6) einen Teilabschnitt des Kapselführungskanals (21) bildet.

9. Kapselfülleinrichtung nach Anspruch 7 oder 8,
**dadurch gekennzeichnet, dass** die Kapselfülleinrichtung eine Aufnahmestation (11) für leere Kapseln (1) und eine Ausstoßstation (19) für befüllte Kapseln (1') umfasst, wobei eine erste Kapselwiegeeinrichtung (2) eingangsseitig der Aufnahmestation (11) für eine Tara-Wiegung angeordnet ist, und wobei eine zweite Kapselwiegeeinrichtung (2') ausgangsseitig der Ausstoßstation (19) für eine Brutto-Wiegung angeordnet ist.

## Claims

1. Capsule weighing device (2, 2') for weighing capsules (1, 1'), comprising a measuring unit (3) and a capsule measuring receptacle (4) for holding a capsule (1, 1') in a weight force direction (5),
**characterised in that** the capsule measuring receptacle (4) is positioned at the side of the measuring unit (3) with respect to the weight force direction (5) and has a capsule measuring channel (6), which is continuous in the weight force direction (5) and has a releasable locking mechanism (7) for the capsule (1, 1').

2. Capsule weighing device according to claim 1,
**characterised in that** the capsule measuring channel (6) is designed as a tube which is closed in the circumferential direction.

3. Capsule weighing device according to claim 1 or 2,
**characterised in that** the capsule weighing device (2, 2') has at least one wind shield (8) for closing and opening the entry side and/or the exit side of the capsule measuring channel (6) as required.

4. Capsule weighing device according to any of claims 1 to 3,
**characterised in that** the capsule measuring channel (6) is shielded electrically.

5. Capsule weighing device according to any of claims 1 to 4,
**characterised in that** the locking mechanism (7) comprises a latch (9) bearing-mounted at the capsule measuring channel (6) and a drive (10) of the latch (9), which is separate from the capsule measuring receptacle (4).

6. Capsule weighing device according to any of claims 1 to 5,
**characterised in that** the capsule measuring channel (6) is designed for the accommodation of an upright capsule (1, 1').

7. Capsule filling device comprising at least one the capsule weighing device (2, 2') according to any of claims 1 to 6.

8. Capsule filling device according to claim 7,
**characterised in that** the capsule filling device comprises a capsule guide channel (21), and **in that** the capsule measuring channel (6) forms a subsection of the capsule guide channel (21).

9. Capsule filling device according to claim 7 or 8,
**characterised in that** that the capsule filling device comprises a reception station (11) for empty capsules (1) and an ejection station (19) for filled capsules (1'), wherein a first capsule weighing device (2) is located on the entry side of the reception station (11) for a tare weighing process and wherein a second capsule weighing device (2') is located on the exit side of the ejection station (19) for a gross weighing process.

## Revendications

1. Dispositif de pesage de gélules (2, 2') pour peser des gélules (1, 1'), comprenant une unité de mesure (3) et un logement de mesure de gélules (4) pour tenir une gélule (1, 1') lors du pesage dans une direction de gravité (5),
**caractérisé en ce que** le logement de mesure de gélules (4) est positionné sur le côté de l'unité de mesure (3) par rapport à la direction de gravité (5) et comporte un canal de mesure de gélules (6) continu dans la direction de gravité (5) et pourvu d'un mécanisme de blocage amovible (7) pour la gélule (1, 1').

2. Dispositif de pesage de gélules selon la revendication 1,
**caractérisé en ce que** le canal de mesure de gélules (6) est formé comme un conduit fermé dans le sens circonférentiel.

3. Dispositif de pesage de gélules selon la revendication 1 ou 2,
**caractérisé en ce que** le dispositif de pesage de gélules (2, 2') comporte au moins un pare-vent (8) pour fermer et ouvrir en fonction des besoins le côté entrée et/ou le côté sortie du canal de mesure de gélules (6).

4. Dispositif de pesage de gélules selon l'une des revendications 1 à 3,
**caractérisé en ce que** le canal de mesure de gélules (6) est blindé électriquement.

5. Dispositif de pesage de gélules selon l'une des revendications 1 à 4,
**caractérisé en ce que** le mécanisme de blocage (7) comprend un verrou (9) monté sur le canal de mesure de gélules (6) et un entraînement (10) du verrou (9) séparé du logement de mesure de gélules (4).

6. Dispositif de pesage de gélules selon l'une des revendications 1 à 5,
**caractérisé en ce que** le canal de mesure de gélules (6) est conçu pour recevoir une gélule (1, 1') placée debout.

7. Dispositif de remplissage de gélules comprenant au moins un dispositif de pesage de gélules (2, 2') selon l'une des revendications 1 à 6.

8. Dispositif de remplissage de gélules selon la revendication 7,
**caractérisé en ce que** le dispositif de remplissage de gélules comprend un canal de guidage de gélules (21) et **en ce que** le canal de mesure de gélules (6) forme un tronçon partiel du canal de guidage de gélules (21).

9. Dispositif de remplissage de gélules selon la revendication 7 ou 8,
**caractérisé en ce que** le dispositif de remplissage de gélules comprend une station de réception (11) pour les gélules vides (1) et un dispositif d'éjection (19) pour les gélules remplies (1'), dans lequel un premier dispositif de pesage de gélules (2) est disposé sur le côté entrée de la station de réception (11) pour un pesage de tare, et dans lequel un deuxième dispositif de pesage de gélules (2') est disposé sur le côté sortie de la station d'éjection (19) pour un pesage brut.
